# FASCICULE DE BREVET EUROPEEN

(11) **EP 3 978 357 B1**
(45) Date de publication et mention de la délivrance du brevet: **02.08.2023**
(21) Numéro de dépôt: 21200393.3
(22) Date de dépôt: 01.10.2021
(51) Int. Cl.: B64B 1/32

(54) **DIRIGEABLE AÉROSTATIQUE À ENVELOPPE SOUPLE ET EXTENSION MOTORISÉE**
AEROSTATISCHES LUFTSCHIFF MIT FLEXIBLER HÜLLE UND MOTORISIERTER EXTENSION
AEROSTATIC AIRSHIP WITH FLEXIBLE SHELL AND MOTORISED EXTENSION

(30) Priorité: 01.10.2020 FR 2010057
(43) Date de publication de la demande: 06.04.2022
(73) Titulaire: RTE RESEAU DE TRANSPORT D'ELECTRICITE, 92073 Paris La Défense Cedex (FR)
(72) Inventeur: POUPAT, Nicolas, 31560 Nailloux (FR)
(74) Mandataire: Bonnet, Michel

(56) Documents cités:
- EP-B1- 1 772 374
- CA-A1- 2 693 672
- CN-A- 104 986 319
- CN-U- 205 087 138

## Description

La présente invention concerne un dirigeable aérostatique à enveloppe souple et extension motorisée comportant un dispositif de fixation de l'extension motorisée sur une face externe de l'enveloppe souple.

Une application concerne par exemple les véhicules aériens aérostatiques sans humain à bord, ou drones dirigeables, présentant une enveloppe souple maintenue sous pression. La propulsion de tels drones dirigeables est généralement assurée par deux extensions motorisées, ou bras moteurs, orientables à 360 degrés. Pour le bon équilibre d'un drone dirigeable, les bras moteurs doivent être de préférence positionnés au milieu de l'enveloppe souple. Mais il est difficile de fixer les bras moteurs, qui sont généralement des éléments rigides, à l'enveloppe souple du dirigeable. C'est la raison pour laquelle, la plupart du temps, les moteurs sont disposés sous l'enveloppe souple. Cette solution n'est pas optimale en termes d'équilibrage.

Une autre solution est par exemple enseignée dans le document de brevet EP 1 772 374 B1. Elle consiste à monter un assemblage complexe de haubans autour de l'enveloppe souple pour maintenir le plus fermement possible les extensions latérales de bras de moteurs. Outre la complexité de cette solution, le maintien équilibré de la base de chaque bras de moteur contre l'enveloppe souple n'est pas évident à assurer.

Pour une meilleure fixation de la base d'une extension motorisée sur l'enveloppe souple du dirigeable, l'invention s'applique plus particulièrement à un dispositif de fixation comportant :
- une platine destinée à être au contact de l'enveloppe souple,
- des moyens de fixation de la platine sur une face externe de l'enveloppe souple,
- une base de support de l'extension motorisée, et
- des éléments de fixation de la base de support sur la platine.

Un exemple est par exemple fourni dans le document de brevet CN 104986319 A. Les dimensions latérales de la platine carrée, dont la courbure épouse celle de l'enveloppe souple du dirigeable, permettent d'envisager un maintien équilibré de la base de support de l'extension motorisée. Mais la fixation, par soudure, collage ou autre, de la platine sur la face externe de l'enveloppe souple pose problème. Celui-ci n'est d'ailleurs ni abordé ni résolu dans le document CN 104986319 A.

Il peut ainsi être souhaité de prévoir un dirigeable aérostatique à enveloppe souple et extension motorisée qui permette de s'affranchir d'au moins une partie des problèmes et contraintes précités.

Il est donc proposé un dirigeable aérostatique à enveloppe souple et extension motorisée comportant un dispositif de fixation de l'extension motorisée sur une face externe de l'enveloppe souple, le dispositif de fixation comportant une platine destinée à être au contact de l'enveloppe souple, des moyens de fixation de la platine sur la face externe de l'enveloppe souple, une base de support de l'extension motorisée et des éléments de fixation de la base de support sur la platine, dans lequel :
- la platine et la base de support sont conçues pour former un ensemble de bride/contre-bride ; et
- les moyens de fixation de la platine sur la face externe de l'enveloppe souple comportent plusieurs pièces de fixation indépendantes, chacune présentant une extrémité destinée à être solidaire de la face externe de l'enveloppe souple et une partie médiane enserrée entre la platine et la base de support de l'ensemble bride/contre-bride à l'aide des éléments de fixation.

Ainsi, la platine n'étant pas elle-même directement solidarisée à l'enveloppe souple, mais par l'intermédiaire de plusieurs pièces de fixation indépendantes enserrées dans l'ensemble de bride/contre-bride qu'elle forme avec la base de support de l'extension motorisée, il est possible de jouer simplement sur le nombre et la disposition de ces pièces de fixation en fonction de la configuration de l'ensemble de bride/contre-bride pour améliorer singulièrement la fermeté et l'équilibrage du maintien de l'extension motorisée contre l'enveloppe souple du dirigeable.

De façon optionnelle, chaque pièce de fixation présente une autre extrémité, opposée à l'extrémité destinée à être solidaire de la face externe de l'enveloppe souple, à ralingue et jonc s'étendant dans un espace intérieur libre de l'ensemble de bride/contre-bride.

De façon optionnelle également, chaque pièce de fixation comporte un élément textile en polyuréthane, notamment avec trame polyamide, destiné à être soudé ou collé sur la face externe de l'enveloppe souple.

De façon optionnelle également, la platine et la base de support sont de forme polygonale, notamment comportant au moins autant de pièces de fixation indépendantes que de côtés de cette forme polygonale.

De façon optionnelle également, les éléments de fixation de la base de support sur la platine comportent des boulons ou des vis.

De façon optionnelle également, un dispositif de fixation selon l'invention peut en outre comporter :
- plusieurs tiges de répartition d'efforts solidaires de la base de support et s'étendant latéralement en inclinaison autour de l'ensemble de bride/contre-bride pour prendre appui sur la face externe de l'enveloppe souple ; et
- plusieurs pièces de fixation des tiges de répartition d'efforts, notamment des pièces à crochets et boucles textiles, destinées à être soudées ou collées sur la face externe de l'enveloppe souple.

De façon optionnelle également, chaque tige de répartition d'efforts est solidarisée à la base de support par insertion de l'une de ses extrémités dans un logement diagonal incliné correspondant de la base de support.

De façon optionnelle également, l'extrémité d'insertion de chaque tige est munie d'un manchon à fixation par vissage latéral dans le logement diagonal incliné correspondant de la base de support.

De façon optionnelle également, un dispositif de fixation selon l'invention peut en outre comporter plusieurs disques d'appui contre la face externe de l'enveloppe souple, chaque disque d'appui étant fixé par vissage à une extrémité libre, opposée à l'extrémité d'insertion, de l'une des tiges de répartition d'efforts.

De façon optionnelle également, au moins l'une des tiges de répartition d'efforts comporte deux portions de tige assemblées l'une dans un prolongement désaxé de l'autre à l'aide d'un boîtier de jonction à logements correspondants désaxés.

L'invention sera mieux comprise à l'aide de la description qui va suivre, donnée uniquement à titre d'exemple et faite en se référant aux dessins annexés dans lesquels :
[Fig.1] la figure 1 représente schématiquement en vue de dessus un dirigeable aérostatique muni de deux extensions motorisées latérales,
[Fig.2] la figure 2 représente schématiquement en coupe un dispositif de fixation de l'une des deux extensions motorisées sur l'enveloppe souple du dirigeable aérostatique de la figure 1, selon un premier mode de réalisation de l'invention,
[Fig.3] la figure 3 illustre en perspective un exemple de réalisation d'une platine du dispositif de fixation de la figure 2,
[Fig.4] la figure 4 illustre en perspective un exemple de réalisation d'une base de support d'extension motorisée du dispositif de fixation de la figure 2,
[Fig.5] la figure 5 représente schématiquement en perspective un dispositif de fixation de l'une des deux extensions motorisées sur l'enveloppe souple du dirigeable aérostatique de la figure 1, selon un deuxième mode de réalisation de l'invention,
[Fig.6] la figure 6 illustre un premier détail de l'une quelconque des tiges de répartition d'efforts du dispositif de fixation de la figure 5 et de son ancrage dans la base de support de la figure 4,
[Fig.7] la figure 7 illustre un deuxième détail de l'une quelconque des tiges de répartition d'efforts du dispositif de fixation de la figure 5,
[Fig.8] la figure 8 illustre un troisième détail de l'une quelconque des tiges de répartition d'efforts du dispositif de fixation de la figure 5, et
[Fig.9] la figure 9 illustre un quatrième détail de l'une quelconque des tiges de répartition d'efforts du dispositif de fixation de la figure 5.

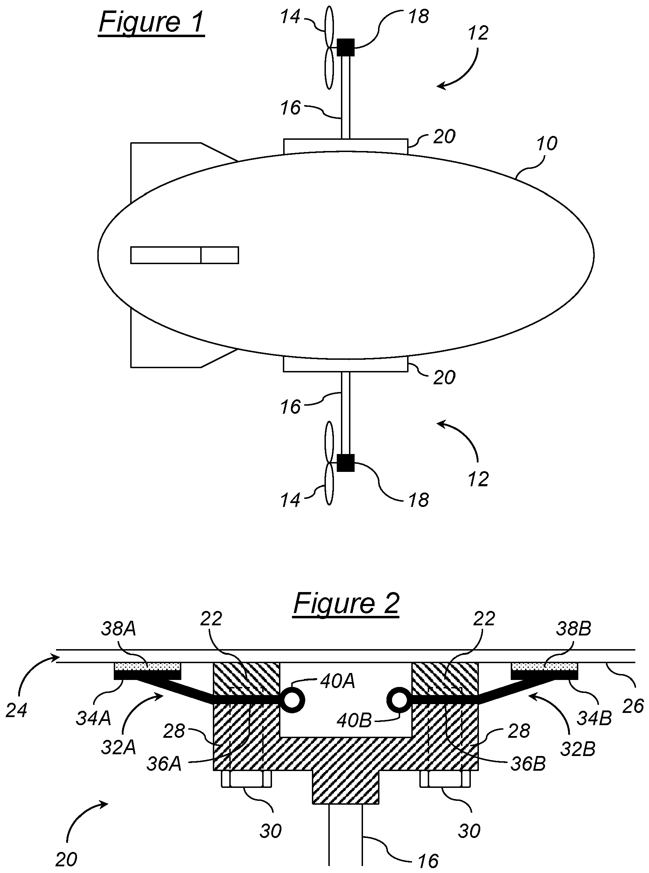

L'ensemble dirigeable représenté schématiquement en vue de dessus sur la figure 1 comporte un dirigeable aérostatique 10 dont l'enveloppe souple est remplie d'un gaz sous pression. Il comporte en outre deux extensions motorisées latérales 12 pour sa propulsion. On notera qu'avantageusement les hélices 14 de ces deux extensions motorisées latérales 12 peuvent pivoter à 360 degrés autours des bras latéraux 16 qui portent leurs moteurs d'entrainement 18. Deux dispositifs de fixation 20 sont en outre prévus latéralement pour un maintien ferme et équilibré des deux extensions motorisées latérales 12 contre l'enveloppe souple du dirigeable aérostatique 10.

L'un des deux dispositifs de fixation 20 est illustré en coupe sur la figure 2. Il représente un exemple non limitatif de réalisation possible d'un dispositif de fixation selon la présente invention. Il comporte une platine 22 disposée au contact de l'enveloppe souple 24 du dirigeable aérostatique 10, plus précisément contre sa face externe 26. Il comporte en outre une base 28 de support de l'extension motorisée latérale 12 correspondante, plus précisément une base de support 28 recevant une extrémité à fixer de l'un des bras latéraux 16. La platine 22 et la base de support 28 sont toutes deux par exemple en aluminium. En variante, elles pourraient être conçues en carbone, ou plus généralement en matériau composite à fibres de carbone, ou équivalent.

La platine 22 et la base de support 28 sont par ailleurs conçues pour former un ensemble de bride/contre-bride rapportées l'une contre l'autre par des éléments de fixation 30, dont deux sont représentés sur la figure 2 à titre d'exemple non limitatif. Il peut s'agir par exemple de systèmes de vissage par boulonnage, i.e. à l'aide d'une vis et d'un écrou par élément de fixation, ou de systèmes à vissage simple, i.e. à l'aide d'une vis et d'un logement taraudé dans la platine 22 et la base de support 28 par élément de fixation.

Le dispositif de fixation 20 comporte en outre des moyens de fixation de la platine 22 sur la face externe 26.

Ces moyens de fixation comportent plusieurs pièces de fixation indépendantes dont deux sont illustrés sur la figure 2 et prennent les références 32A et 32B. Elles sont par exemple essentiellement constituées chacune d'une bande de textile en polyuréthane, notamment avec trame polyamide.

Chacune de ces pièces présente une extrémité 34A, 34B destinée à être solidaire de la face externe 26, disposée à l'extérieur de l'ensemble bride/contre-bride, et une partie médiane 36A, 36B enserrée entre la platine 22 et la base de support 28 de l'ensemble bride/contre-bride à l'aide des éléments de fixation 30. Chaque extrémité 34A, 34B peut en pratique être fixée à la face externe 26 par soudure ou collage, à l'aide d'une couche de soudure ou colle époxy 38A, 38B. Chaque pièce de fixation 32A, 32B présente de plus une autre extrémité 40A, 40B, opposée à l'extrémité 34A, 34B, à surépaisseur, par exemple à ralingue et jonc, s'étendant en butée dans un espace intérieur libre de l'ensemble de bride/contre-bride 22, 28. Plus précisément, l'extrémité 40A, 40B à ralingue et jonc empêche la partie médiane 36A, 36B de glisser entre la platine 22 et la base de support 28 en venant en butée grâce à sa surépaisseur contre l'ensemble de bride/contre-bride 22, 28 dans son espace intérieur libre.

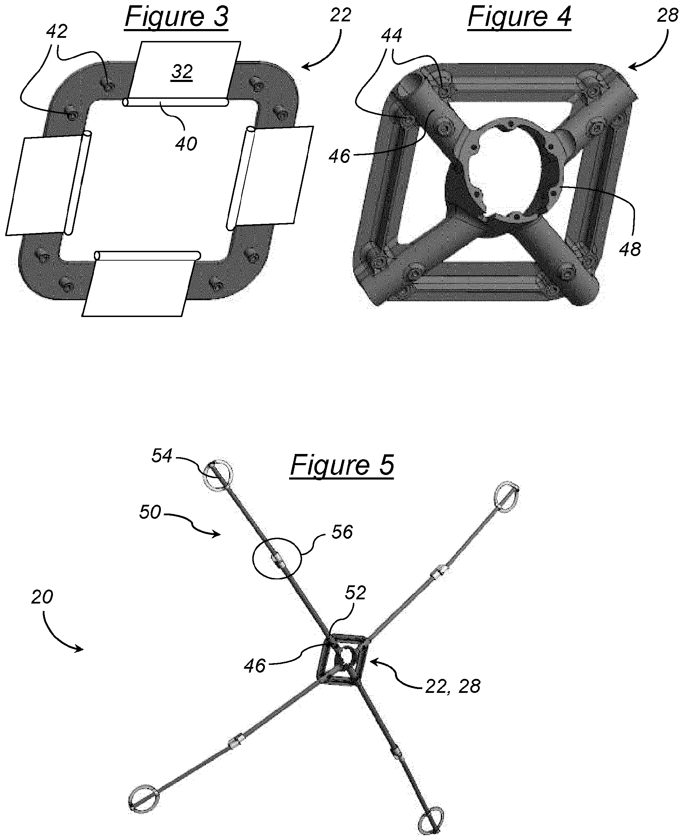

La figure 3 illustre en perspective un exemple de réalisation en forme de cadre pour la platine 22 qui, de façon plus générale, est avantageusement de forme polygonale. A chacun des quatre coins du cadre sont formés deux logements taraudés 42 pour recevoir les éléments de fixation 30 qui prennent alors la forme de simples vis, au nombre de huit. Ce nombre est un simple exemple. Plus ou moins de vis peuvent être prévues en fonction du contexte d'application. Sur chacun des quatre côtés du cadre est disposé une pièce de fixation indépendante 32 telle que l'une des pièces 32A, 32B de la figure précédente, son extrémité 40 à surépaisseur, par exemple à ralingue et jonc, butant contre la platine 22 à l'intérieur du cadre qu'elle forme. Plusieurs pièces de fixation indépendantes pourraient être disposées sur chacun des quatre côtés du cadre selon différentes configurations et dimensions possibles. Plus généralement, il peut être prévu au moins autant de pièces de fixation indépendantes que de côtés de la forme polygonale de la platine 22. Il peut aussi être prévu moins de pièces de fixation indépendantes que de côtés de cette forme polygonale.

La figure 4 illustre en perspective un exemple de réalisation en forme de cadre également pour la base de support 28 qui, de façon plus générale et comme la platine 22, est avantageusement de forme polygonale. A chacun des quatre coins du cadre sont formés deux logements taraudés 44 destinés à coopérer avec les deux logements taraudés 42 correspondants de la platine 22 pour recevoir les éléments de fixation 30 et former l'ensemble de bride/contre-bride. D'une façon générale, il est prévu autant de logements taraudés 44 que d'élément de fixation 30 à utiliser pour former l'ensemble de bride/contre-bride. On notera également que la platine 22 et la base de support 28 ne sont pas nécessairement de même forme pour constituer l'ensemble bride/contre-bride.

A partir de chacun des quatre coins du cadre formé par la base de support 28, quatre manchons 46 s'étendent diagonalement vers l'intérieur et en inclinaison pour rejoindre un socle central 48 par exemple tronconique destiné à recevoir le bras latéral 16 correspondant. Le cadre, les quatre manchons 46 et le socle 48 sont par exemple venus de matière par moulage. En ce qui concerne le socle 48, celui illustré sur la figure 4 présente une forme telle que son plan de réception du bras latéral 16 est incliné, de sorte que ce dernier présente une inclinaison par rapport à la normale au plan principal du cadre de la base de support 28, et donc de la platine 22, et donc localement de la face externe 26 du dirigeable aérostatique 10 sur laquelle le dispositif de fixation 20 est disposé. Cette inclinaison est réglable à volonté selon l'application envisagée. Elle peut être nulle pour une extension latérale normale à l'enveloppe souple 24 du dirigeable aérostatique 10.

Comme l'illustre la figure 5 en perspective selon un autre mode de réalisation possible de la présente invention, le dispositif de fixation 20 peut en outre comporter plusieurs tiges 50 de répartition d'efforts, par exemple au moins quatre lorsque l'ensemble bride/contre-bride 22, 28 est de forme carrée. Plus généralement, il peut être prévu au moins autant de tiges 50 de répartition d'efforts que d'angles de la forme polygonale de la base de support 28. Chaque tige 50 est par exemple formée d'un tube en carbone, ou matériau composite à fibres de carbone, ou équivalent. Elle présente une extrémité d'insertion 52 venant se loger à l'intérieur de l'un des manchons 46. Compte tenu de l'inclinaison et de la disposition en diagonale des quatre manchons 46, chaque tige 50 s'étend latéralement en diagonale et inclinaison autour de l'ensemble de bride/contre-bride 22, 28. L'inclinaison des manchons 46 est définie pour que chaque tige 50 puisse prendre appui avec une certaine souplesse sur la face externe 26 de l'enveloppe souple 24 de manière à épouser sa forme. On notera que chaque tige 50 de répartition d'efforts de la figure 5 présente une extrémité libre 54 opposée à son extrémité d'insertion 52 et une partie médiane 56 à rallonge éventuelle. On notera également que la longueur de chaque tige 50 est adaptable en fonction de la forme de l'enveloppe souple 24 et de l'application visée. La forme de chaque tige 50 elle-même peut être adaptée à l'enveloppe souple 24 pour épouser sa forme.

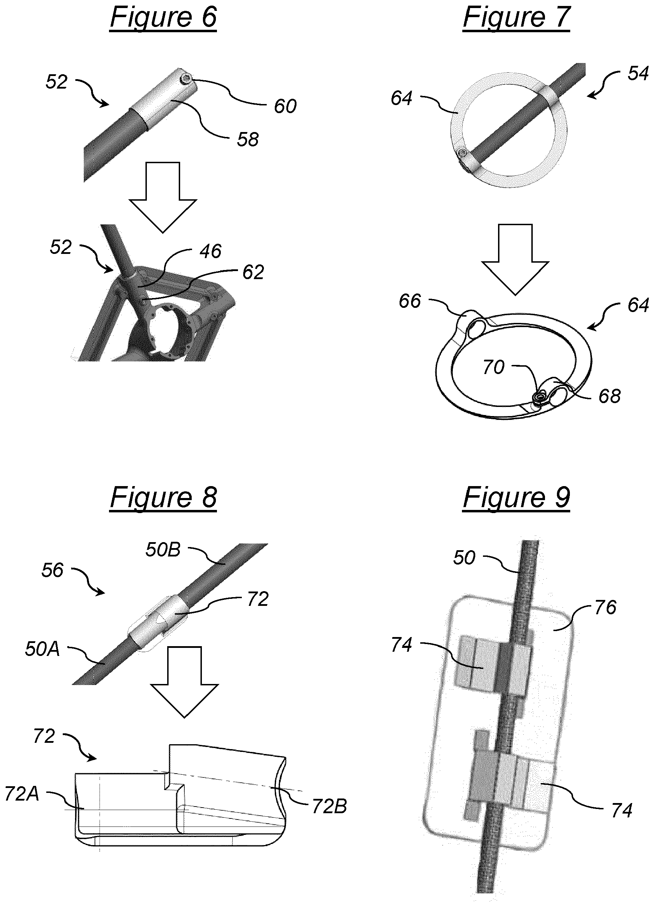

La figure 6 illustre l'extrémité d'insertion 52 de l'une quelconque des tiges 50 de répartition d'efforts. Elle est munie d'un manchon 58 en aluminium (ou en carbone, ou en matériau composite à fibres de carbone, ou équivalent) à fixation par vissage latéral 60 dans le logement diagonal incliné du manchon 46 correspondant de la base de support 28. Le manchon 46 comporte donc un trou traversant 62 correspondant pour la réalisation de cette fixation latérale.

La figure 7 illustre l'extrémité libre 54 de l'une quelconque des tiges 50 de répartition d'efforts. Cette extrémité libre 54 est amenée à s'appuyer contre la face externe 26 de l'enveloppe souple 24. Pour ne pas fragiliser cette dernière, elle est donc pourvue d'un disque d'appui 64 en aluminium (ou en carbone, ou en matériau composite à fibres de carbone, ou équivalent) dans lequel elle s'insère, par exemple, en diagonale à travers deux bagues 66, 68 du disque dont l'une (68) est munie d'une fixation 70 par vissage.

La figure 8 illustre la partie médiane 56 à rallonge de l'une quelconque des tiges 50 de répartition d'efforts. Plus précisément, dans ce mode de réalisation optionnel, au moins l'une des tiges 50 est constituée de deux portions de tige 50A, 50B assemblées l'une dans un prolongement désaxé de l'autre à l'aide d'un boîtier de jonction 72 à logements correspondants 72A, 72B désaxés. En vue de dessus dans la partie supérieure de la figure 8, on voit que les deux portions de tige 50A, 50B sont dans le prolongement l'une de l'autre. En vue de côté dans la partie inférieure de la figure 8, on voit que les deux logements 72A, 72B sont désaxés. Le logement 72A recevant la portion proximale 50A de la tige 50 est d'axe parallèle à la base du boîtier de jonction 72, tandis que le logement 72B qui reçoit la portion distale 50B de la tige 50 présente une inclinaison pour renforcer la pression de la tige 50 contre la face externe 26 de l'enveloppe souple 24 de manière à mieux épouser sa forme en partie distale. Plus généralement, au moins l'une quelconque des tiges 50 peut être constituée de plus de deux portions de tiges, soit N tiges avec N ≥ 2. Dans ce cas, N-1 boîtiers de jonction sont à prévoir pour les assembler bout à bout.

En outre, comme l'illustre la figure 9, le dispositif de fixation 20 peut comporter plusieurs pièces 74 de fixation des tiges 50 de répartition d'efforts sur la face externe 26 de l'enveloppe souple 24. Deux pièces de fixation 74 sont représentées sur cette figure, montées sur une plaque 76 elle-même soudée ou collée sur la face externe 26. Ces pièces 74 sont par exemple des bandes de textile à crochets et boucles textiles pour un maintien amovible de l'une quelconque des tiges 50 contre la face externe 26 de l'enveloppe souple 24.

II apparaît clairement qu'un dispositif de fixation tel que l'un de ceux décrits précédemment permet d'améliorer le maintien de la disposition, notamment latérale, d'une extension motorisée sur l'enveloppe souple d'un dirigeable aérostatique. En outre, lorsque ce dispositif de fixation comporte des tiges de répartition d'efforts telles que celles illustrées sur la figure 5, l'équilibre des contraintes exercées sur l'enveloppe souple est encore mieux assuré par diffusion des efforts induits par les rotations des moteurs et des hélices.

On notera par ailleurs que l'invention n'est pas limitée aux modes de réalisation décrits précédemment.

En particulier, une application pour drones dirigeables a été indiquée précédemment, mais une application en transport de personnes par dirigeable motorisé peut également mettre en oeuvre les principes généraux de la présente invention, à un changement d'échelle près.

## Revendications

1. Dirigeable aérostatique (10) à enveloppe souple (24) et extension motorisée (12), comportant un dispositif (20) de fixation de l'extension motorisée (12) sur une face externe (26) de l'enveloppe souple (24), le dispositif de fixation (20) comportant une platine (22) destinée à être au contact de l'enveloppe souple (24), des moyens de fixation de la platine (22) sur la face externe (26) de l'enveloppe souple (24), une base (28) de support de l'extension motorisée et des éléments (30) de fixation de la base de support (28) sur la platine (22), **caractérisé en ce que** :
- la platine (22) et la base de support (28) sont conçues pour former un ensemble de bride/contre-bride ; et
- les moyens de fixation de la platine (22) sur la face externe (26) de l'enveloppe souple (24) comportent plusieurs pièces de fixation indépendantes (32A, 32B ; 32), chacune présentant une extrémité (34A, 34B) destinée à être solidaire de la face externe (26) de l'enveloppe souple (24) et une partie médiane (36A, 36B) enserrée entre la platine (22) et la base de support (28) de l'ensemble bride/contre-bride à l'aide des éléments de fixation (30).

2. Dirigeable aérostatique (10) à enveloppe souple (24) et extension motorisée (12) selon la revendication 1, dans lequel chaque pièce de fixation (32A, 32B ; 32) présente une autre extrémité (40A, 40B ; 40), opposée à l'extrémité (34A, 34B) destinée à être solidaire de la face externe (26) de l'enveloppe souple (24), à ralingue et jonc s'étendant dans un espace intérieur libre de l'ensemble de bride/contre-bride.

3. Dirigeable aérostatique (10) à enveloppe souple (24) et extension motorisée (12) selon la revendication 1 ou 2, dans lequel chaque pièce de fixation (32A, 32B ; 32) comporte un élément textile en polyuréthane, notamment avec trame polyamide, destiné à être soudé ou collé sur la face externe (26) de l'enveloppe souple (24).

4. Dirigeable aérostatique (10) à enveloppe souple (24) et extension motorisée (12) selon l'une quelconque des revendications 1 à 3, dans lequel la platine (22) et la base de support (28) sont de forme polygonale, notamment comportant au moins autant de pièces de fixation indépendantes (32A, 32B ; 32) que de côtés de cette forme polygonale.

5. Dirigeable aérostatique (10) à enveloppe souple (24) et extension motorisée (12) selon l'une quelconque des revendications 1 à 4, dans lequel les éléments (30) de fixation de la base de support (28) sur la platine (22) comportent des boulons ou des vis.

6. Dirigeable aérostatique (10) à enveloppe souple (24) et extension motorisée (12) selon l'une quelconque des revendications 1 à 5, comportant :
- plusieurs tiges (50) de répartition d'efforts solidaires de la base de support (28) et s'étendant latéralement en inclinaison autour de l'ensemble de bride/contre-bride pour prendre appui sur la face externe (26) de l'enveloppe souple (24) ; et
- plusieurs pièces (74) de fixation des tiges (50) de répartition d'efforts, notamment des pièces à crochets et boucles textiles, destinées à être soudées ou collées sur la face externe (26) de l'enveloppe souple (24).

7. Dirigeable aérostatique (10) à enveloppe souple (24) et extension motorisée (12) selon la revendication 6, dans lequel chaque tige (50) de répartition d'efforts est solidarisée à la base de support (28) par insertion de l'une de ses extrémités (52) dans un logement diagonal incliné (46) correspondant de la base de support (28).

8. Dirigeable aérostatique (10) à enveloppe souple (24) et extension motorisée (12) selon la revendication 7, dans lequel l'extrémité d'insertion (52) de chaque tige (50) est munie d'un manchon (58) à fixation par vissage latéral (60) dans le logement diagonal incliné (46) correspondant de la base de support (28).

9. Dirigeable aérostatique (10) à enveloppe souple (24) et extension motorisée (12) selon l'une quelconque des revendications 6 à 8, comportant en outre plusieurs disques d'appui (64) contre la face externe (26) de l'enveloppe souple (24), chaque disque d'appui (64) étant fixé par vissage (70) à une extrémité libre (54), opposée à l'extrémité d'insertion (52), de l'une des tiges (50) de répartition d'efforts.

10. Dirigeable aérostatique (10) à enveloppe souple (24) et extension motorisée (12) selon l'une quelconque des revendications 6 à 9, dans lequel au moins l'une des tiges (50) de répartition d'efforts comporte deux portions de tige (50A, 50B) assemblées l'une dans un prolongement désaxé de l'autre à l'aide d'un boîtier de jonction (72) à logements correspondants (72A, 72B) désaxés.

## Patentansprüche

1. Aerostatisches Luftschiff (10) mit flexibler Hülle (24) und motorisierter Erweiterung (12), eine Vorrichtung (20) zum Befestigen der motorisierten Erweiterung (12) an einer Außenseite (26) der flexiblen Hülle (24) beinhaltend, wobei die Befestigungsvorrichtung (20) eine Platine (22) beinhaltet, die dazu bestimmt ist, in Kontakt mit der flexiblen Hülle (24) zu sein, Mittel zur Befestigung der Platine (22) an der Außenseite (26) der flexiblen Hülle (24), eine Basis (28) zum Tragen der motorisierten Erweiterung und Elemente (30) zum Befestigen der Basis zum Tragen (28) an der Platine (22), **dadurch gekennzeichnet, dass**:
- die Platine (22) und die Basis zum Tragen (28) gestaltet sind, um eine Flansch-/Gegenflanscheinheit zu bilden; und
- die Mittel zum Befestigen der Platine (22) an der Außenseite (26) der flexiblen Hülle (24) mehrere unabhängige Befestigungsteile (32A; 32B; 32) beinhalten, von denen jedes ein Ende (34A, 34B) aufweist, das dazu bestimmt ist, fest mit der Außenseite (26) der flexiblen Hülle (24) verbunden zu sein, und einen Mittelteil (36A, 36B), der zwischen der Platine (22) und der Basis zum Tragen (28) der Flansch-/Gegenflanscheinheit mithilfe der Befestigungselemente (30) eingespannt ist.

2. Aerostatisches Luftschiff (10) mit flexibler Hülle (24) und motorisierter Erweiterung (12) nach Anspruch 1, wobei jedes Befestigungsteil (32A; 32B; 32) ein weiteres Ende (40A, 40B; 40) gegenüber dem Ende (34A, 34B), das dazu bestimmt ist, fest mit der Außenseite (26) der flexiblen Hülle (24) verbunden zu sein, mit Liek und Keder aufweist, das sich in einem freien Innenraum der Flansch-/Gegenflanscheinheit erstreckt.

3. Aerostatisches Luftschiff (10) mit flexibler Hülle (24) und motorisierter Erweiterung (12) nach Anspruch 1 oder 2, wobei jedes Befestigungsteil (32A; 32B; 32) ein Textilelement aus Polyurethan, insbesondere mit einem Polyamid-Schussfaden beinhaltet, das dazu bestimmt ist, an die Außenseite (26) der flexiblen Hülle (24) geschweißt oder geklebt zu werden.

4. Aerostatisches Luftschiff (10) mit flexibler Hülle (24) und motorisierter Erweiterung (12) nach einem der Ansprüche 1 bis 3, wobei die Platine (22) und die Basis zum Tragen (28) in einer polygonalen Form sind, wobei sie insbesondere mindestens ebenso viele unabhängige Befestigungsteile (32A; 32B; 32) wie Seiten dieser polygonalen Form beinhalten.

5. Aerostatisches Luftschiff (10) mit flexibler Hülle (24) und motorisierter Erweiterung (12) nach einem der Ansprüche 1 bis 4, wobei die Elemente (30) zum Befestigen der Basis zum Tragen (28) auf der Platine (22) Bolzen oder Schrauben beinhalten.

6. Aerostatisches Luftschiff (10) mit flexibler Hülle (24) und motorisierter Erweiterung (12) nach einem der Ansprüche 1 bis 5, Folgendes beinhaltend:
- mehrere Gestänge (50) zur Kräfteverteilung, die fest mit der Basis zum Tragen (28) verbunden sind, und sich seitlich um die Flansch-/Gegenflanscheinheit geneigt erstrecken, um sich an der Außenseite (26) der flexiblen Hülle (24) anzulegen; und
- mehrere Teile (74) zum Befestigen der Gestänge (50) zur Kräfteverteilung, insbesondere Teile mit Haken und Textilschlingen, die dazu bestimmt sind, an die Außenseite (26) der flexiblen Hülle (24) geschweißt oder geklebt zu werden.

7. Aerostatisches Luftschiff (10) mit flexibler Hülle (24) und motorisierter Erweiterung (12) nach Anspruch 6, wobei ein jedes Gestänge (50) zur Kräfteverteilung durch Einführen eines seiner Enden (52) in eine geneigte diagonale Aufnahme (46) entsprechend der Basis (28) zum Tragen fest mit der Basis zum Tragen (28) verbunden ist.

8. Aerostatisches Luftschiff (10) mit flexibler Hülle (24) und motorisierter Erweiterung (12) nach Anspruch 7, wobei das Einführungsende (52) eines jeden Gestänges (50) mit einer Muffe (58) zum Befestigen durch seitliches Verschrauben (60) in der geneigten diagonalen Aufnahme (46) entsprechend der Basis zum Tragen (28) versehen ist.

9. Aerostatisches Luftschiff (10) mit flexibler Hülle (24) und motorisierter Erweiterung (12) nach einem der Ansprüche 6 bis 8, weiter mehrere Anlegescheiben (64) an der Außenseite (26) der flexiblen Hülle (24) beinhaltend, wobei jede Anlegescheibe (64) durch Verschrauben (70) an einem freien Ende (54) gegenüber dem Einführungsende (52) eines der Gestänge (50) zur Kräfteverteilung befestigt ist.

10. Aerostatisches Luftschiff (10) mit flexibler Hülle (24) und motorisierter Erweiterung (12) nach einem der Ansprüche 6 bis 9, wobei mindestens eines der Gestänge (50) zur Kräfteverteilung zwei Gestängeabschnitte (50A, 50B) beinhaltet, die mithilfe einer Anschlussdose (72) mit entsprechenden axial verschobenen Aufnahmen (72A, 72B) in axial verschobener Folge miteinander zusammengesetzt sind.

## Claims

1. An aerostatic airship (10) with flexible envelope (24) and motorised extension (12), comprising a device (20) for fixing the motorised extension (12) to an external face (26) of the flexible envelope (24), the fixing device (20) comprising a plate (22) intended to be in contact with the flexible envelope (24), means for fixing the plate (22) to the external face (26) of the flexible envelope (24), a base (28) for supporting the motorised extension and elements (30) for fixing the support base (28) to the plate (22), **characterised in that**:
- the plate (22) and the support base (28) are designed to form a flange/counter-flange assembly; and
- the means for fixing the plate (22) to the external face (26) of the flexible envelope (24) comprise a plurality of independent fixing parts (32A, 32B; 32), each having an end (34A, 34B) intended to be secured to the external face (26) of the flexible envelope (24) and a central part (36A, 36B) clamped between the plate (22) and the support base (28) of the flange/counter-flange assembly by means of the fixing elements (30).

2. The aerostatic airship (10) with flexible envelope (24) and motorised extension (12) according to claim 1, wherein each fixing part (32A, 32B; 32) has another end (40A, 40B; 40), opposite to the end (34A, 34B) intended to be secured to the external face (26) of the flexible envelope (24), with a selvedge and a rod extending into a free internal space of the flange/counter-flange assembly.

3. The aerostatic airship (10) with flexible envelope (24) and motorised extension (12) according to claim 1 or 2, wherein each fixing part (32A, 32B; 32) comprises a polyurethane textile element, in particular with a polyamide weft, intended to be welded or glued to the external face (26) of the flexible envelope (24).

4. The aerostatic airship (10) with flexible envelope (24) and motorised extension (12) according to any of claims 1 to 3, wherein the plate (22) and the support base (28) are of polygonal shape, in particular comprising at least as many independent fixing parts (32A, 32B; 32) as there are sides of this polygonal shape.

5. The aerostatic airship (10) with flexible envelope (24) and motorised extension (12) according to any of claims 1 to 4, wherein the elements (30) for fixing the support base (28) to the plate (22) comprise bolts or screws.

6. The aerostatic airship (10) with flexible envelope (24) and motorised extension (12) according to any of claims 1 to 5, comprising:
- a plurality of force-distributing rods (50) integral with the support base (28) and extending laterally at an angle around the flange/counter-flange assembly to bear on the external face (26) of the flexible envelope (24); and
- several parts (74) for fixing the force-distributing rods (50), in particular parts with textile hooks and loops, intended to be welded or glued to the external face (26) of the flexible envelope (24).

7. The aerostatic airship (10) with flexible envelope (24) and motorised extension (12) according to claim 6, wherein each force-distributing rod (50) is secured to the support base (28) by insertion of one of its ends (52) into a corresponding inclined diagonal housing (46) of the support base (28).

8. The aerostatic airship (10) with flexible envelope (24) and motorised extension (12) according to claim 7, wherein the insertion end (52) of each rod (50) is provided with a sleeve (58) for fixing by lateral screwing (60) in the corresponding inclined diagonal housing (46) of the support base (28).

9. The aerostatic airship (10) with flexible envelope (24) and motorised extension (12) according to any of claims 6 to 8, further comprising several bearing discs (64) against the external face (26) of the flexible envelope (24), each bearing disc (64) being fixed by screwing (70) to a free end (54), opposite the insertion end (52), of one of the force-distributing rods (50).

10. The aerostatic airship (10) with flexible envelope (24) and motorised extension (12) according to any of claims 6 to 9, wherein at least one of the force-distributing rods (50) comprises two rod portions (50A, 50B) assembled one in an off-axis extension of the other by means of a junction box (72) with off-axis corresponding housings (72A, 72B).
